# EUROPÄISCHE PATENTSCHRIFT

(11) **EP 1 864 841 B1**
(45) Veröffentlichungstag und Bekanntmachung des Hinweises auf die Patenterteilung: **13.07.2011**
(21) Anmeldenummer: 07004309.6
(22) Anmeldetag: 02.03.2007
(51) Int. Cl.: B60J 7/20, B60J 7/22

(54) **Cabriolet mit einem Windschott als Abdeckung für einen Verdeckaufnahmeraum**
Convertible with a wind stop as cover for a roof storage compartment
Cabriolet doté d'un pare vent comme couvercle pour un compartiment de stockage de toit

(30) Priorität: 08.06.2006 DE 102006026660
(43) Veröffentlichungstag der Anmeldung: 12.12.2007
(73) Patentinhaber: Dr. Ing. h.c. F. Porsche AG, 70435 Stuttgart (DE)
(72) Erfinder: Fröschle, Mathias, 73760 Ostfildern (DE)

(56) Entgegenhaltungen:
- EP-A- 0 764 555
- DE-A1- 19 646 240
- DE-C1- 10 215 836

## Beschreibung

Die vorliegende Erfindung betrifft ein Cabriolet nach dem Oberbegriff des Anspruchs 1.

Aus der DE 196 46 240 A1 ist ein solches Cabriolet bekannt. Es besitzt einen Verdeckaufnahmeraum zum Aufnehmen eines Verdecks. Außerdem besitzt das Cabriolet ein Windschott, das in eine Ruhestellung und in eine Wirkstellung bringbar ist, wobei es in seiner Wirkstellung als Windschutz dient. Bei dem bekannten Cabriolet ist das Windschott auf der Außenseite des ablegbaren Verdecks aufgebracht. In der Ablageposition des Verdecks kann so das oben liegende Windschott den Verdeckaufnahmeraum zum Teil abdecken, wenn es seine Ruhestellung einnimmt.

Aus der DE 102 15 836 C1 ist ein Cabriolet bekannt, das hinter den Vordersitzen einen Fondstauraum hat, der von oben zugänglich ist und in dem Notsitze angeordnet sein können. Der Fondstauraum ist mittels einer Abdeckvorrichtung verschließbar. Diese Abdeckvorrichtung ist hochklappbar und kann als Windschott dienen. Hinter dem Fondstauraum schließt sich ein Kofferraum oder Verdeckkasten an, der mittels einer Klappe abdeckbar ist.

Aus der DE 195 35 593 A1 ist ebenfalls ein Cabriolet bekannt, das ein Windschott aufweist. Das Windschott ist um eine Querachse schwenkbar an einem Verdeckkastendeckel angeordnet, so dass es sich in Ruhestellung auf der Oberseite des Verdeckkastendeckels befindet. Dabei ist das Windschott weitgehend in die Kontur des Verdeckkastendeckels integriert.

Es ist die Aufgabe der vorliegenden Erfindung, ein Cabriolet zu ermöglichen, das einfach aufgebaut ist und einem geöffneten, in einen Verdeckaufnahmeraum eingefahrenen Verdeck einen guten Schutz gewährleistet, und das ein Windschott mit optimiertem Windschutz aufweist.

Diese Aufgabe wird gemäß der technischen Lehre des Anspruchs 1 gelöst. Der Verdeckaufnahmeraum und das Windschott sind so angeordnet und ausgebildet, dass das Windschott in seiner Ruhestellung eine Abdeckung zum zumindest teilweisen Abdecken des Verdeckaufnahmeraums darstellt, wobei erfindungsgemäß das Windschott einen sich in Cabrioquerrichtung erstreckenden Mittelteil und zwei Seitenteile aufweist, die benachbart zu zwei, in Cabrioletquerrichtung betrachtet, seitlichen Endbereichen des Mittelteils angeordnet sind.

Aufgrund der vorliegenden Erfindung kann der zumindest teilweise offene Verdeckaufnahmeraum in der Ruhestellung des Windschotts durch das Windschott zumindest teilweise, vorteilhafterweise vollständig, abgedeckt werden. Ein in dem Verdeckaufnahmeraum befindliches Verdeck und der Verdeckaufnahmeraum selbst werden somit durch das Windschott vor schädlichen Außeneinflüssen geschützt. Eine zusätzliche eigenständige Abdeckung des Verdeckaufnahmeraums muss nicht mehr vorgesehen sein. Dadurch wird vorteilhafterweise ein geringes Gewicht des Cabriolets ermöglicht. Dies stellt zudem eine kostengünstige Lösung dar. Das Windschott kann zwei unterschiedliche Funktionen, nämlich als Windschutz und als Abdeckung, erfüllen. Die Erfindung kann somit besonders gut für Cabriolets genutzt werden, die Dachsysteme aufweisen, bei denen das eingefahrene Verdeck mit keiner oder einer nur teilweisen Abdeckung des Verdeckaufnahmeraums abgedeckt wird. Ferner kann eine gute Optik, insbesondere bei stehendem Cabriolet und abgeklapptem Windschott in Ruhestellung, gewährleistet werden. Wie bereits erwähnt, weist das Windschott erfindungsgemäß einen sich in Cabrioletquerrichtung erstreckenden Mittelteil und zwei Seitenteile auf. Die zwei Seitenteile sind benachbart zu zwei, in Cabrioletquerrichtung betrachtet, seitlichen Endbereichen des Mittelteils angeordnet. Dadurch können vorteilhafterweise getrennte, voneinander unabhängige Ausgestaltungen, insbesondere der Formen, des Mittelteils und der Seitenteile erfolgen, so dass die beiden von dem Windschott zu erfüllenden Funktionen als Windschutz und als Abdeckung besonders gut erfüllt werden können.

Die zwei Seitenteile sind bevorzugt an zwei, in Cabrioletquerrichtung betrachtet, seitlichen Endbereichen des Mittelteils angeordnet. Dadurch kann, wenn gewünscht, vorteilhafterweise eine Veränderung des Windschotts von Wirk- in Ruhestellung, und umgekehrt, sowohl für das Mittelteil als auch die Seitenteile gleichzeitig durchgeführt werden. Mittelteil und Seitenteile sind so auf einfache Weise miteinander gekoppelt.

Vorzugsweise sind die zwei Seitenteile in den zwei seitliches Endbereichen des Mittelteils beweglich gelagert. Die Ausrichtung und Positionierung der Seitenteile kann somit vorteilhafterweise gegenüber dem Mittelteil verändert werden. Dies ermöglicht ein weiter verbessertes Erfüllen der beiden Funktionen des Windschotts als Windschutz und als Abdeckung. Die Funktionsweise des Windschotts kann auf einfache Weise verändert werden. Durch ein Bewegen der beiden Seitenteile in eine Wirkstellung, in der sie neben dem Mittelteil als Windschutz dienen, kann eine große Längserstreckung des Windschotts erreicht werden. Zudem können die beiden in ihrer Wirkstellung befindlichen Seitenteile durch ein Bewegen vorteilhafterweise einen Schwenkbereich von Verdecklenkern freigeben und somit auf einfache Weise ein problemloses Verschließen des Verdecks ermöglichen.

In einer weiteren vorteilhaften Ausgestaltung sind die zwei Seitenteile um in den zwei seitlichen Endbereichen des Mittelteils vorhandene Schwenkachsen schwenkbar gelagert. Die Schwenkachsen verlaufen insbesondere senkrecht zu einer Längserstreckung des Mittelteils. Dadurch ist die Beweglichkeit der Seitenteile besonders einfach und effizient gewährleistet. Die Seitenteile können insbesondere vor oder hinter die durch den Mittelteil aufgespannte Windschottfläche verschwenkt werden.

In einer besonders bevorzugten Ausgestaltung der Erfindung sind in den zwei seitlichen Endbereichen des Mittelteils in Richtung der Längserstreckung des Mittelteils verlaufende Schienen vorhanden. In diesen Schienen sind die zwei Seitenteile verschiebbar gelagert. Dadurch ist ebenfalls die Beweglichkeit der Seitenteile besonders einfach und effizient gewährleistet. Die Seitenteile können insbesondere vor oder hinter die durch den Mittelteil aufgespannte Windschottfläche verschoben werden.

In einer vorteilhaften Ausgestaltung sind die zwei Seitenteile an einer Karosserie des Cabriolets angeordnet. Dadurch kann das Mittelteil entkoppelt von den Seitenteilen angebracht und betätigbar sein.

In einer weiteren vorteilhaften Ausgestaltung sind die zwei Seitenteile unabhängig voneinander an der Karosserie des Cabriolets schwenkbar befestigt. Dadurch ist ein Betätigen von Mittelteil und Seitenteilen unabhängig voneinander möglich. Während das Mittelteil in seiner Wirkstellung als Windschutz dient, können die Seitenteile in ihrer Ruhestellung als Abdeckung fungieren, und umgekehrt. Dadurch sind mehrere vielseitige Einstellmöglichkeiten gegeben.

Besonders vorteilhaft ist der Mittelteil des Windschotts um eine sich in Cabrioletquerrichtung erstreckende Schwenkachse schwenkbar gelagert. Dadurch kann auf einfache Weise zwischen seiner Wirk- und seiner Ruhestellung gewechselt werden. Der Mittelteil kann beispielsweise in der Karosserie des Cabriolets gelagert sein. Dabei müssen die Seitenteile nicht notwendigerweise selbst an dieser Schwenkachse schwenkbar gelagert sein.

Bevorzugt ist der Mittelteil des Windschotts zum Öffnen und/oder Schließen eines Verdecks des Cabriolets in seine Wirkstellung bringbar, in der es als Windschutz dient. Dies ist insbesondere möglich, ohne dass die Seitenteile ebenfalls in der Wirkstellung sind.

Besonders bevorzugt weist das Windschott zum Gewährleisten der Windschutz- und der Abdeckwirkung eine Wirkfläche auf, die so ausgestaltet ist, dass eine senkrecht zu einer Längserstreckung des Windschotts verlaufende Höhe der Wirkfläche veränderbar ist. Die von dem Windschott in seiner Ruhestellung als Abdeckung abzudeckende Wirkfläche kann, um eine optimale Abdeckung zu gewährleisten, eine andere Größe haben, als die von dem Windschott in ihrer Wirkstellung einzunehmende Wirkfläche, um einen optimalen Windschutz zu gewährleisten. Die Veränderbarkeit der Höhe der Wirkfläche ermöglicht somit eine optimale Abdeckfläche und eine optimale Windschutzfläche.

Bevorzugt ist das Windschott so ausgestaltet, dass eine senkrecht zu seiner Längserstreckung verlaufende Höhe des Windschotts veränderbar ist. Dadurch kann die Höhe des Windschotts selbst abhängig davon, ob es in der Wirk- oder der Ruhestellung befindet, an die dann zu erfüllende Funktion angepasst werden. Die Veränderbarkeit der Höhe des Windschotts kann beispielsweise besonders effizient mittels eines in Höhenrichtung wirkenden teleskopartigen Verstellmechanismus erreicht werden.

Besonders bevorzugt weist das Windschott einen mit einem Stoff, insbesondere einem Netzstoff, bespannten Rahmen auf. Dies gewährleistet eine einfach und kostengünstig zu realisierende Konstruktion des Windschotts, bei gleichzeitig besonders gutem Erfüllen der gewünschten Funktionen.

Weiter bevorzugt ist der Stoff ausschließlich an einem in Längserstreckung verlaufenden oberen Querteil und an einem in Längserstreckung verlaufenden unteren Querteil des Windschotts befestigt. Dies ermöglicht auf einfache Weise das Verändern der Höhe des Windschotts. Ein Befestigen des Stoffs an einem seitlichen Teil des Rahmens ist nicht erforderlich.

Vorteilhafterweise ist der Stoff ein dehnbarer Stoff. Diese Dehnbarkeit ist insbesondere so ausgestaltet, dass der Stoff, ohne beschädigt zu werden, auch die größtmöglich einstellbare Windschottfläche überdeckt. Beim Einstellen einer kleineren Windschottfläche zieht sich der Stoff zusammen, vorteilhafterweise ohne Falten zu werfen, so dass der aufgespannte Stoff weiterhin eine gute Spannung aufweist.

Bevorzugt ist das Windschott so ausgestaltet, dass es in seiner Ruhestellung eine Bombierung aufweist, die an eine Bombierung eines an den Verdeckaufnahmeraum angrenzenden Karosseriebereichs angepasst ist. Dadurch richtet sich das in seiner Ruhestellung befindliche, als Abdeckung dienende Windschott vorteilhafterweise nach der Kontur der Karosserie im Bereich des Verdeckaufnahmeraums. Dies gewährleistet eine besonders gute Optik und ein besonders ästhetisches Aussehen des Cabriolets.

Besonders bevorzugt ist das Windschott so ausgestaltet, dass es in seiner Wirkstellung eine in Cabrioletlängsrichtung nach vorne gerichtete Bombierung aufweist. Dadurch wird in Fahrtrichtung des Cabriolets ein strömungstechnisch betrachtet besonders gutes Verhalten des Windschotts erreicht. Eine besonders gute Wirkung des Windschotts als Windschutz ist dadurch gewährleistet.

Weiter bevorzugt weist ein oberes Querteil des Windschotts eine Bombierung auf und ist drehbar gelagert. Dadurch lässt sich auf besonders einfache Weise die Ausrichtung der Bombierung des Windschotts an die gerade gewünschte Funktion als Windschutz oder als Abdeckung anpassen.

Bevorzugt ist das obere Querteil in einem seitlichen Endbereich des Windschotts drehbar gelagert. Dies stellt eine besonders einfach zu realisierende Ausgestaltung für das Drehen dar. Das obere Querteil kann insbesondere in den seitlichen Endbereichen der Seitenteile drehbar gelagert sein.

Besonders bevorzugt ist das obere Querteil mittels einer Führung nach Art eines Viergelenks geführt. Eine solche Führung kann insbesondere so ausgestaltet sein, dass sie beim Verändern der Stellung des Windschotts von der Ruhe- in die Wirkstellung, und umgekehrt, ein Verändern der Ausrichtung der Bombierung des Windschotts vornimmt. Die Ausrichtung der Bombierung wird daher beim Verschwenken des Windschotts automatisch an die von dem Windschott zu erfüllenden Funktionen als Abdeckung oder Windschutz angepasst.

Einfachheitshalber ist eine Betätigung eines Verdecks des Cabriolets mit einer Betätigung des Windschotts gekoppelt. Dadurch können Veränderungen der Positionen von Verdeck und Windschott in einem gemeinsamen Vorgang miteinander verbunden werden. Insbesondere kann die Kopplung so ausgestaltet sein, dass in ihrer Wirkstellung befindliche Seitenteile des Windschotts beim Schließen des Verdecks automatisch eingeklappt werden, um Platz zu schaffen für Verdecklenker des Verdecks. Nach abgeschlossenem Schließvorgang des Verdecks kann das komplette Windschott automatisch in seine Ruhestellung gebracht werden.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügte Zeichnung. Es zeigen:
- Fig. 1: eine perspektivische Darstellung eines ersten Ausführungsbeispiels eines Cabriolets mit einem dreiteiligen Windschott in seiner Ruhestellung, in der es als Abdeckung eines Verdeckkastens des Cabriolets dient,
- Fig. 2: das Cabriolet nach Fig. 1, mit dem in seiner Wirkstellung befindlichen Windschott, in der es als Windschutz dient,
- Fig. 3: eine Seitenansicht des Cabriolets nach Fig. 1 mit dem Windschott in seiner Ruhestellung,
- Fig. 4: eine Seitenansicht des Cabriolets nach Fig. 2 mit dem Windschott in seiner Wirkstellung,
- Fig. 5: eine Draufsicht auf das Cabriolet nach Fig. 1 mit dem Windschott in seiner Ruhestellung,
- Fig. 6: eine Draufsicht auf das Cabriolet nach Fig. 2 mit dem Windschott in seiner Wirkstellung,
- Fig. 7: eine perspektivische Darstellung des Cabriolets nach Fig. 1 mit dem Windschott in seiner Wirkstellung, wobei zwei Seitenteile des dreiteiligen Windschotts hinter ein Mittelteil des Windschotts geschwenkt sind,
- Fig. 8: eine perspektivische Darstellung des Cabriolets nach Fig. 1 mit dem Windschott in seiner Wirkstellung, wobei die zwei Seitenteile des Windschotts um einen spitzen Winkel nach vorne geschwenkt sind,
- Fig. 9: eine Seitenansicht des Cabriolets nach Fig. 7,
- Fig. 10: eine Seitenansicht des Cabriolets nach Fig. 8,
- Fig. 11: eine Draufsicht auf das Cabriolet nach Fig. 7,
- Fig. 12: eine Draufsicht auf das Cabriolet nach Fig. 8,
- Fig. 13: eine perspektivische Darstellung eines zweiten Ausführungsbeispiels eines Cabriolets mit einem Windschott in seiner Ruhestellung, wobei ein oberes Querteil eines Rahmens des Windschotts eine Bombierung nach hinten aufweist und mittels eines Viergelenks geführt ist,
- Fig. 14: eine perspektivische Darstellung des zweiten Ausführungsbeispiels des Cabriolets nach Fig. 13 mit dem Windschott in seiner Wirkstellung, wobei das obere Querteil des Rahmens des Windschotts eine Bombierung nach vorne aufweist,
- Fig. 15: eine Seitenansicht des Cabriolets nach Fig. 13,
- Fig. 16: eine Seitenansicht des Cabriolets nach Fig. 14,
- Fig. 17: eine Draufsicht auf das Cabriolet nach Fig. 13,
- Fig. 18: eine Draufsicht auf das Cabriolet nach Fig. 14 und
- Fig. 19: eine schematische Ansicht des Cabriolets mit schwenkbar an einer Karosserie befestigten Seitenteilen des Windschotts.

Im Folgenden werden für gleiche oder gleichwirkende Elemente durchweg gleiche Bezugszeichen verwendet.

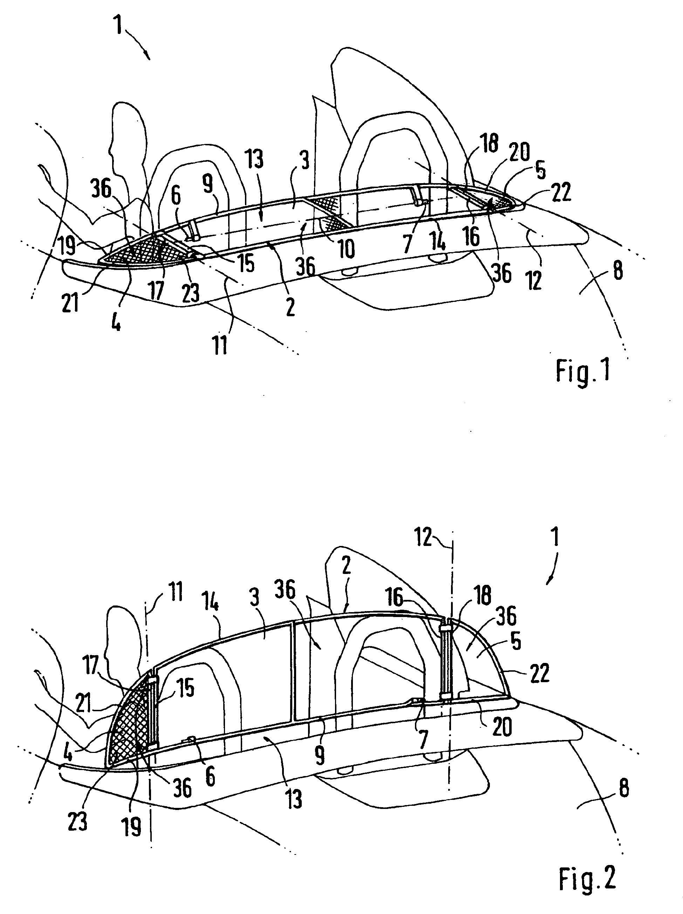

Fig. 1 zeigt eine perspektivische Darstellung eines ersten Ausführungsbeispiels eines Cabriolets 1 mit einem dreiteiligen Windschott 2. Das Windschott 2 weist einen Mittelteil 3 und zwei an den, in eine Querrichtung des Cabriolets 1 betrachtet, seitlichen Endbereichen des Mittelteils 3 angeordnete Seitenteile 4 und 5 auf. Der Mittelteil 3 des Windschotts 2 ist mittels zweier, in der Fig. 1 angedeuteter Zapfen 6 und 7 an einer Verstrebung einer Karosserie 8 des Cabriolets 1 schwenkbar gelagert. Die Zapfen 6, 7 sind dabei an einem unteren Querbügel 9 des rahmenförmig ausgestalteten Mittelteils 3 angeordnet. Eine durch die Lagerung gebildete Schwenkachse 10 verläuft in Richtung einer Längserstreckung des Mittelteils 3, die der Querrichtung des Cabriolets 1 entspricht. Das Windschott 2 ist um die Schwenkachse 10 um ca. 90° nach oben in eine Wirkstellung und nach unten in eine Ruhestellung verschwenkbar. Die beiden Seitenteile 4, 5 sind um Schwenkachsen 11 bzw. 12 schwenkbar an den beiden seitlichen Endbereichen des Mittelteils 3 gelagert. Die Schwenkachsen 11, 12 verlaufen annähernd senkrecht zu der Schwenkachse 10. Durch die schwenkbare Lagerung können die beiden Seitenteile 4, 5, in Längsrichtung des Cabriolets 1 betrachtet, nach vorne und nach hinten verschwenkbar. Es ist auch möglich, in den zwei seitlichen Endbereichen des Mittelteils 3 in Richtung seiner Längserstreckung Schienen anzuordnen. In diesen Schienen können die zwei Seitenteile 4, 5 verschiebbar gelagert sein. Dadurch ist ebenfalls eine Beweglichkeit der Seitenteile 4, 5 besonders einfach und effizient gewährleistet. Die Seitenteile 4, 5 können insbesondere vor oder hinter die durch den Mittelteil 3 aufgespannte Windschottfläche verschoben werden.

Das Windschott 2 befindet sich in Fig. 1 in der Ruhestellung, in der es als Abdeckung eines zumindest teilweise offenen Verdeckkastens 13 des Cabriolets 1 dient. Der Verdeckkasten 13 dient zum Aufnehmen eines in einem geöffneten Zustand befindlichen Verdecks des Cabriolets 1. Der Verdeckkasten 13 ist im vorliegenden Ausführungsbeispiel hinter einem Passagierbereich mit Fahrer- und Beifahrersitz angeordnet. Es ist aber ebenso möglich, dass sich hinter dem Passagierbereich beispielsweise noch ein Fondstauraum befindet, in dem Notsitze angeordnet sein können.

Das Windschott 2 ist hier rahmenförmig ausgestaltet. Der Mittelteil 3 wird durch einen oberen Querbügel 14, den unteren Querbügel 9, und zwei, die seitlichen Enden des oberen Querbügels 14 und des unteren Querbügels 9 verbindende Seitenbügel 15 und 16 gebildet. Die beiden Seitenteile 4, 5 werden durch parallel zu den Seitenbügeln 15, 16 verlaufende Längsbügel 17 und 18, unten an die Enden der Längsbügel 17, 18 in rechtem Winkel anschließende, in Querrichtung des Cabriolets 1 nach außen weisende Querbügel 19 und 20 und die äußeren Enden der Querbügel 19, 20 und die oberen Enden der Längsbügel 17, 18 bogenförmig verbindende Bogenbügel 21 und 22 gebildet. Zwischen den Rahmenteilen 9 und 14-22 des Mittelteils 3 und der Seitenteile 4, 5 sind Stoffe 23 aufgespannt, die hier netzförmig ausgestaltet sind. Einfachheitshalber sind die Stoffe 23 hier stellvertretend für die Stoffe 23 in den verschiedenen Teilen des Windschotts 2 in dem Seitenteil 4 durch schraffierte Linien angedeutet. Die Stoffe 23 überspannen eine Wirkfläche 36 des Windschotts 2, die in Wirkstellung eine Windschutzwirkung und in Ruhestellung eine Abdeckwirkung gewährleistet. Generell ist es auch möglich, anstelle der Stoffe 23 ein anderes Material, insbesondere ein festes Material, wie z. B. eine Kunststoffscheibe, zu verwenden.

In der in der Fig. 1 dargestellten Ruhestellung liegt das Windschott 2 auf dem nach oben offenen Verdeckkasten 13 auf und bildet somit die Abdeckung des Verdeckkastens 13. Insbesondere der obere Querbügel 14 und die beiden Bogenbügel 21, 22 weisen Bombierungen, d. h. Wölbungen oder Biegungen auf, die hier in der Ruhestellung nach unten gerichtet sind. Dadurch ist die Form des Windschotts 2 an eine Kontur der Karosserie 8 im Randbereich des Verdeckkastens 13 angepasst. D. h., die Bombierung des rahmenförmigen Windschotts 2 ist an eine Bombierung des an den Verdeckkasten 13 angrenzenden Karosseriebereichs angepasst. Die Kontur des als Abdeckung des Verdeckkastens 13 dienenden Windschotts 2 geht somit vorteilhafterweise in die Kontur der an den Verdeckkasten 13 angrenzenden Karosserie 8 über.

Fig. 2 zeigt das Cabriolet 1 mit dem in seiner Wirkstellung befindlichen Windschott 2. In dieser Wirkstellung ist das Windschott 2 um die Schwenkachse 10 nach oben geschwenkt. Das Windschott 2 dient nun als Windschutz für im Passagierbereich des Cabriolets 1 sitzende Passagiere. Der Verdeckkasten 13 ist in dieser Wirkstellung des Windschotts 2 zumindest teilweise nach oben offen. Die beiden schwenkbaren Seitenteile 4, 5 des Windschotts 2 sind in der Darstellung nach Fig. 2 in Richtung der Längserstreckung des Mittelteils 3 ausgerichtet. Die Wirkfläche des Windschotts 2 wird dadurch verbreitert. Die Anordnung der Seitenteile 4, 5 gewährleistet den Passagieren somit einen besseren Windschutz als ohne die Seitenteile 4, 5.

Es ist möglich, dass sich die Größe der von dem Windschott 2 in seiner Ruhestellung abzudeckenden Fläche des Verdeckkastens 13 von der Größe derjenigen Fläche unterscheidet, die das Windschott 2 in seiner Wirkstellung optimalerweise zum Schutz der Passagiere vor Wind einnimmt. Insbesondere kann die Wirkfläche 36 des Windschotts 2 in seiner Wirkstellung größer sein, als in seiner Ruhestellung. Dazu kann das Windschott 2 so ausgestaltet sein, dass eine senkrecht zu seiner Längserstreckung verlaufende Höhe des Windschotts 2 veränderbar ist. Dadurch kann die Höhe des Windschotts 2, und damit die Wirkfläche 36, abhängig davon, ob sich das Windschott 2 in der Wirk- oder der Ruhestellung befindet, angepasst werden. Die Veränderung der Höhe des Windschotts 2 kann beispielsweise besonders effizient mittels eines in Höhenrichtung wirkenden teleskopartigen Verstellmechanismus erreicht werden. Dieser ist hier insbesondere in die beiden Seitenbügel 15, 16 des Mittelteils 3 integriert. Die Länge der beiden Seitenbügel 15, 16 kann daher verändert werden. Der Stoff 23 des Mittelteils 3 ist dazu ausschließlich an dem oberen Querbügel 14 und dem unteren Querbügel 9 befestigt. Ein Befestigen des Stoffs 23 an den Seitenbügeln 15, 16 ist nicht erforderlich. Der Stoff 23 ist hier ein dehnbarer Stoff. Beim Vergrößern der Wirkfläche 36 wird der Stoff 23 gedehnt. Dabei ist der Stoff 23 so ausgestaltet, dass er durch das Dehnen nicht beschädigt wird. Beim Verkleinern der Wirkfläche 36 zieht sich der Stoff 23 wieder zusammen. Dies geschieht vorteilhafterweise so, dass der Stoff 23 keine Falten wirft. Es ist auch möglich, die Wirkfläche 36 zu verändern, indem die Höhe des Windschotts 2 nicht verändert, allerdings die von dem Stoff 23 aufgespannte Wirkfläche 36 verändert wird. Die kann beispielsweise durch eine geeignete Ausgestaltung der der Drehgelenke oder Scharniere des Windschotts 2 erreicht werden, mit denen das Windschott 2 an der Karosserie 8 gelagert ist. Diese Drehgelenke oder Scharniere können beim Verschwenken des Windschotts 2 ihre wirksame Länge verändern, so dass sich die Position einer unteren Anbindung des Stoffs 23 an dem Windschott 2, und damit die von dem Stoff 23 aufgespannte Wirkfläche 36 entsprechend ändert. Alternativ oder zusätzlich kann insbesondere an dem unteren Querbügel 9 eine Auf- und Abwickeleinrichtung zum Auf- und Abwickeln des Stoffs 23 vorgesehen sein. Dazu kann der untere Querbügel 9 drehbar gelagert sein, so dass der Stoff 23 um die Achse des unteren Querbügels 9 auf- und abgewickelt werden kann. Zusätzlich zu dem Mittelteil 3 kann es auch möglich und vorteilhaft sein, die Wirkflächen 36 der Seitenteile 4, 5 zu verändern. Dazu können die Seitenteile 4, 5 in ihrer Höhe veränderbar sein.

Die Bewegung des Windschotts 2, von seiner Ruhestellung in seine Wirkstellung, und umgekehrt, kann vorteilhafterweise an eine Bewegung des Verdecks des Cabriolets 1 gekoppelt sein. Dazu weist das Cabriolet 1 einen geeigneten, zwischen Windschott 2 und Verdeck wirkenden Koppelungsmechanismus auf. Diese Koppelung zwischen Windschott 2 und Verdeck bewirkt, dass das Windschott 2 den Verdeckkasten 13 beim Schließen des Verdecks freigibt. Beim Öffnen des Verdecks lässt die Kopplung die zwei beschriebenen Funktionsvarianten des Windschotts 2 zu, bei denen das Windschott 2 wahlweise in seine Ruhestellung als Abdeckung des Verdeckkastens 13 oder in seine Wirkstellung als Windschutz gebracht werden kann.

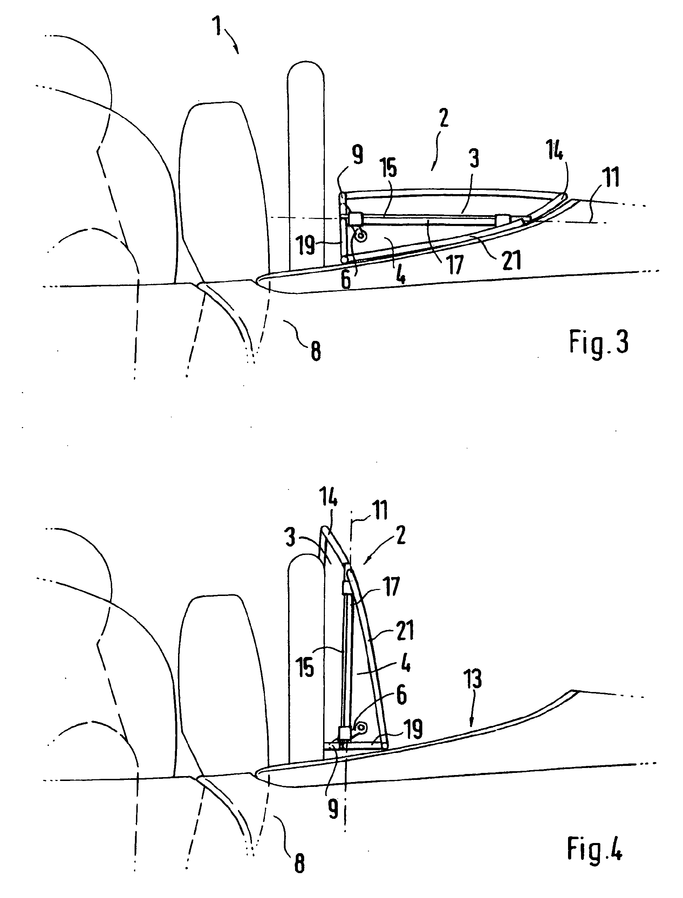

Fig. 3 zeigt eine Seitenansicht des Cabriolets 1 nach Fig. 1 mit dem Windschott 2 in seiner Ruhestellung. Es ist deutlich zu sehen, dass die Kontur des Windschotts 2 durch die Bombierungen des oberen Querbügels 14 und des Bogenbügels 21 an die Kontur der Karosserie 8 im Randbereich des Verdeckkastens 13 angepasst ist. Dies gewährleistet eine besonders gute und ästhetische Optik des Cabriolets 1.

Fig. 4 zeigt eine Seitenansicht des Cabriolets 1 nach Fig. 2 mit dem Windschott 2 in seiner Wirkstellung, in der es um die Schwenkachse 10 nach oben geschwenkt ist. Der Verdeckkasten 13 ist hier zumindest teilweise nach oben offen.

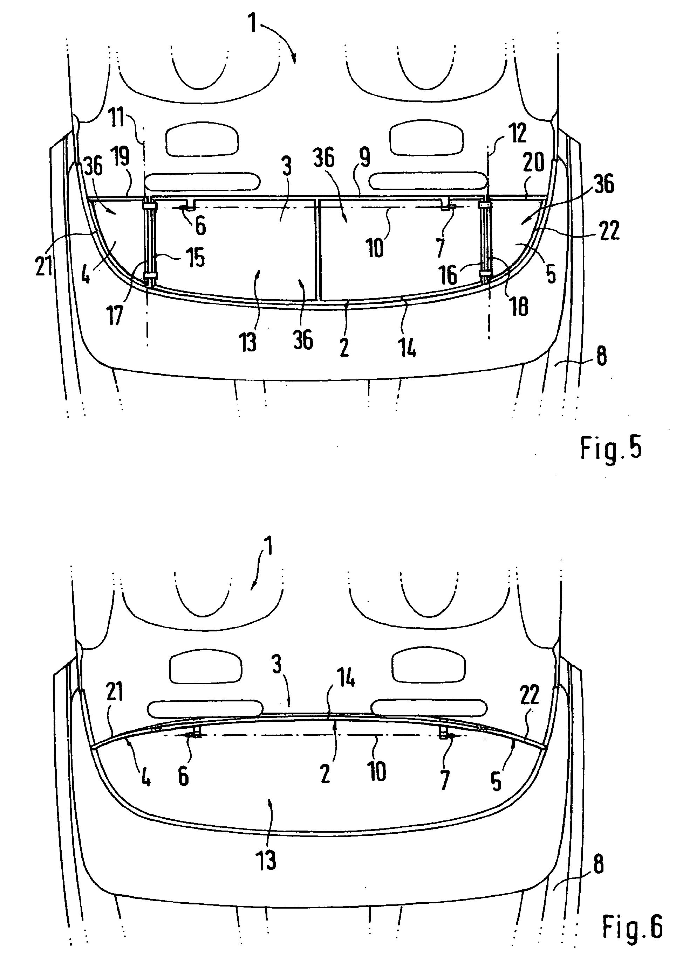

Fig. 5 zeigt eine Draufsicht auf das Cabriolet 1 nach Fig. 1 mit dem Windschott 2 in seiner Ruhestellung. Der Verdeckkasten 13 ist hier an seiner oberen Öffnung durch das Windschott 2 abgedeckt. Das Windschott 2 gewährleistet somit für den Verdeckkasten 13 und das darin befindliche Verdeck einen Schutz vor schädlichen Einflüssen, die von außerhalb des Cabriolets 1 kommen können.

Fig. 6 zeigt eine Draufsicht auf das Cabriolet 1 nach Fig. 2 mit dem Windschott 2 in seiner Wirkstellung. Es sind deutlich die Bombierungen des oberen Querbügels 14 und der Bogenbügel 21, 22 zu sehen. Diese Bombierungen sind in der Wirkstellung des Windschotts 2 nach hinten gerichtet.

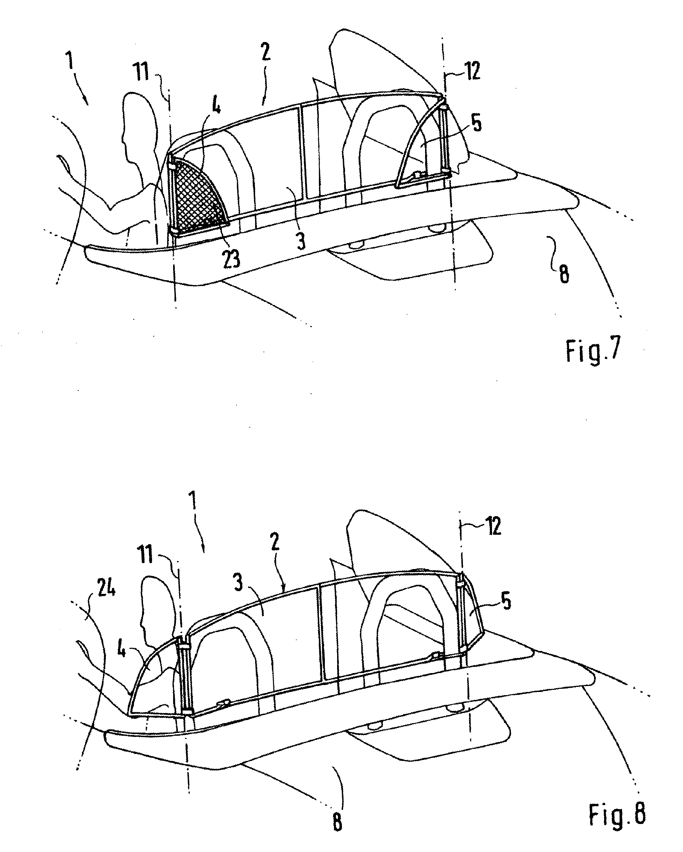

Fig. 7 zeigt eine perspektivische Darstellung des Cabriolets 1 mit dem Windschott 2 in seiner Wirkstellung. In der Darstellung nach Fig. 7 sind die zwei Seitenteile 4, 5 um ihre Schwenkachsen 11, 12, in Längsrichtung des Cabriolets 1 betrachtet, hinter den Mittelteil 3 geschwenkt. Die Wirkflächen der Seitenteile 4, 5 liegen somit in etwa parallel zu der Wirkfläche des Mittelteils 3. In dieser eingeschwenkten Position der Seitenteile 4, 5 kann das Verdeck auf einfache Weise geöffnet oder geschlossen werden. Der mittels Verdecklenker durchgeführte Verschwenkvorgang zum Verschwenken des Verdecks wird durch die Seitenteile 4, 5 nicht behindert.

Fig. 8 zeigt eine perspektivische Darstellung des Cabriolets 1 mit dem Windschott 2 in seiner Wirkstellung. Die zwei Seitenteile 4, 5 sind hier, ausgehend von der Längserstreckung des Windschotts, um einen spitzen Winkel um ihre Schwenkachsen 11, 12, in Längsrichtung des Cabriolets 1 betrachtet, nach vorne geschwenkt. Dadurch wird ein Abstand des Windschotts 2 zu einer Fensterscheibe 24 einer geschlossenen Tür des Cabriolets 1 besonders gering gehalten. Dies verbessert weiter den Windschutz und die Zugfreihaltung des Passagiers.

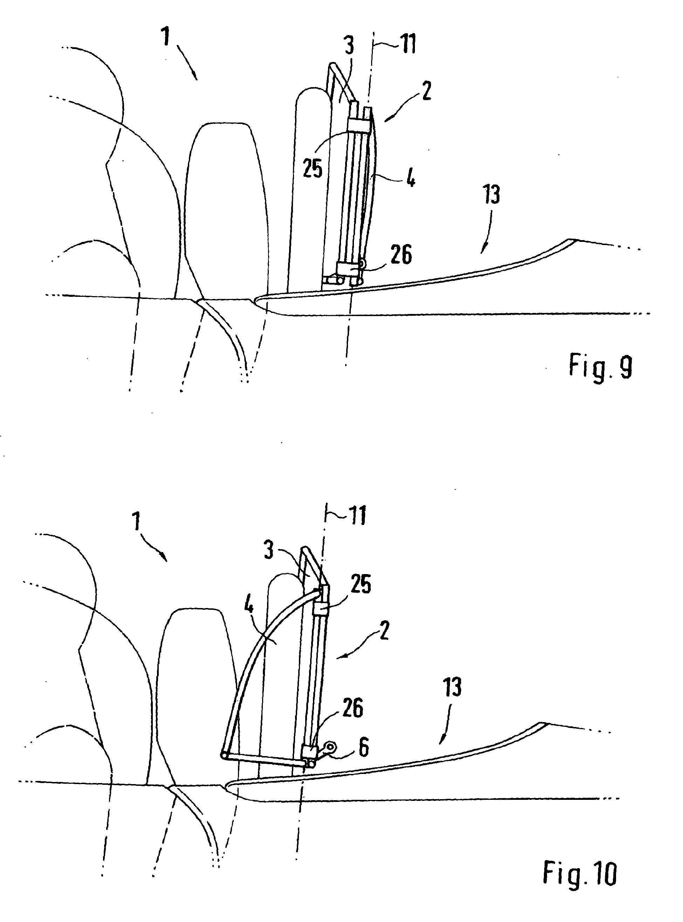

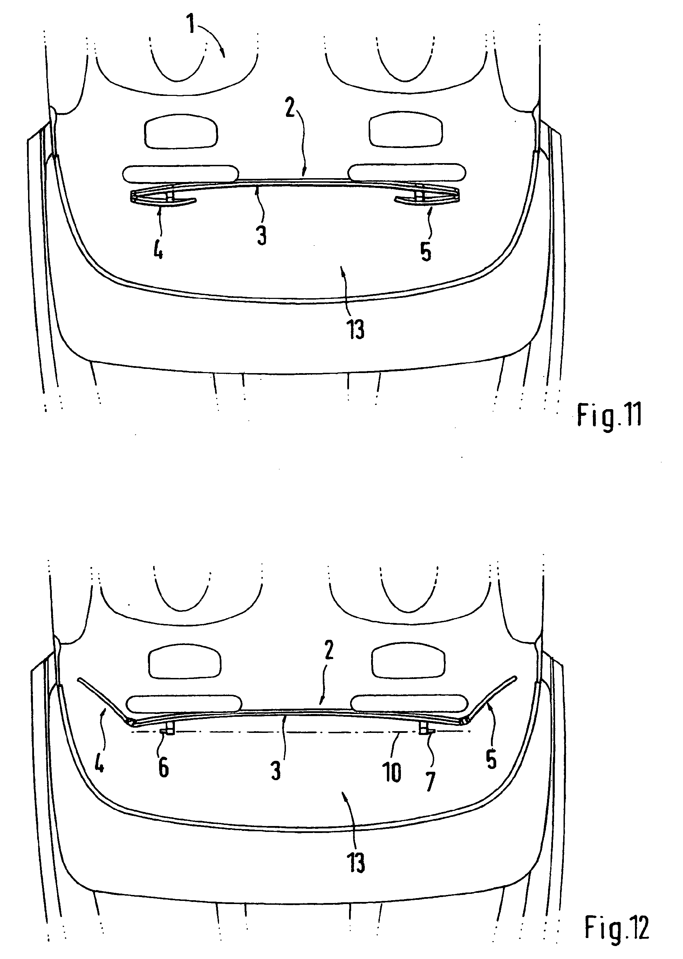

Fig. 9 zeigt eine Seitenansicht des Cabriolets 1 nach Fig. 7 mit dem nach hinten eingeschwenkten Seitenteil 4. Es ist hier deutlich dargestellt, dass die schwenkbare Lagerung des Seitenteils 4 an dem Mittelteil 3 mittels zweier Klammern 25 und 26 ausgeführt ist. Die Klammern 25, 26 greifen an dem Seitenbügel 15 und dem Längsbügel 17 an. Entsprechendes gilt für das Seitenteil 5. Fig. 10 zeigt eine Seitenansicht des Cabriolets 1 nach Fig. 8 mit dem nach vorne geschwenkten Seitenteil 4. Fig. 11 zeigt eine Draufsicht auf das Cabriolet 1 nach Fig. 7 mit den nach hinten eingeschwenkten Seitenteilen 4, 5. Fig. 12 zeigt eine Draufsicht auf das Cabriolet 1 nach Fig. 8 mit den nach vorne geschwenkten Seitenteilen 4, 5.

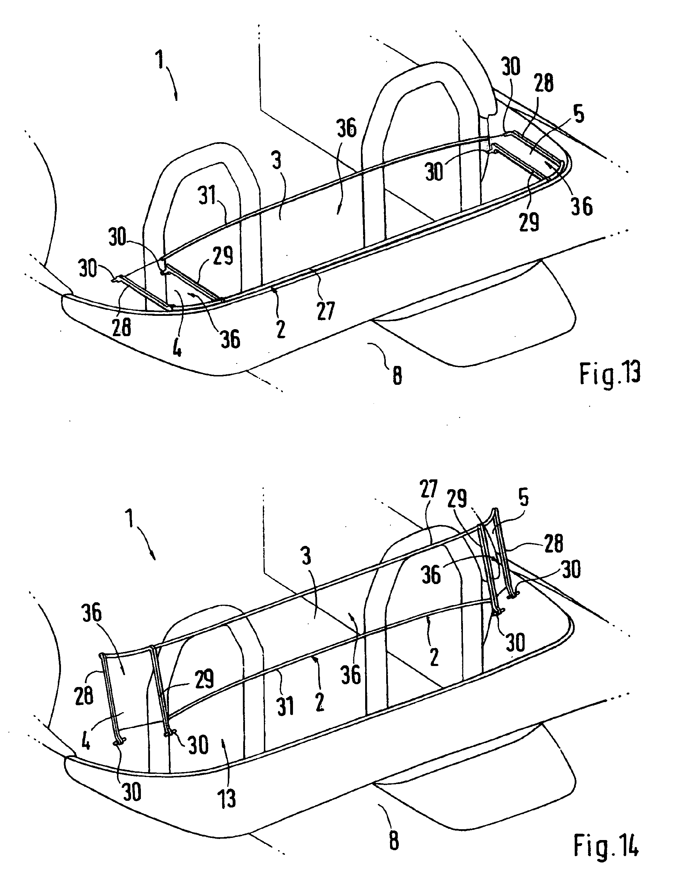

Fig. 13 zeigt eine perspektivische Darstellung eines zweiten Ausführungsbeispiels des Cabriolets 1 mit dem Windschott 2 in seiner Ruhestellung. Fig. 14 zeigt eine perspektivische Darstellung des zweiten Ausführungsbeispiels des Cabriolets 1 mit dem Windschott 2 in seiner Wirkstellung. Das Windschott 2 weist in diesem zweiten Ausführungsbeispiel einen oberen Querbügel 27 auf, der einteilig ausgebildet ist und als oberer Querbügel sowohl für den Mittelteil 3 als auch für die Seitenteile 4, 5 des Windschotts 2 dient. Das Windschott 2 ist hier rahmenförmig ausgestaltet und weist einen an den Rahmenteilen aufgespannten Stoff 23 auf. Die beiden Seitenteile 4, 5 werden durch senkrecht zur Längserstreckung des Windschotts 2 verlaufende äußere Seitenbügel 28 und durch weiter nach innen und nach hinten versetzt angeordnete, innere Seitenbügel 29 sowie durch Endbereiche des oberen Querbügels 27 gebildet. Der obere Querbügel 27 ist in den oberen Enden der äußeren Seitenbügel 28 drehbar gelagert. Die inneren Seitenbügel 29 weisen in ihren oberen Enden Bohrungen auf, durch die der obere Querbügel 27 geführt ist. Die äußeren Seitenbügel 28 und die inneren Seitenbügel 29 sind mittels Zapfen 30 in Verstrebungen der Karosserie 8 schwenkbar gelagert. Der Mittelteil 3 ist hier durch die inneren Seitenbügel 29, den oberen Querbügel 27 und einen unteren Querbügel 31 gebildet.

Der obere Querbügel 27 weist eine Bombierung in Längsrichtung des Cabriolets 1 auf. Der obere Querbügel 27 ist hier nach Art eines Viergelenks geführt. Durch die Anordnung und Ausgestaltung dieses Viergelenks ist die Bombierung des oberen Querbügels 27 nach unten gerichtet, wenn sich das Windschott 2 in seiner Ruhestellung befindet, und die Bombierung ist, in Längsrichtung des Cabriolets 1 betrachtet, nach vorne gerichtet, wenn sich das Windschott 2 in seiner Wirkstellung befindet. Dadurch ist vorteilhafterweise gewährleistet, dass die Kontur des Windschotts 2 in seiner Ruhestellung mit der Kontur der Karosserie 8 im Randbereich des Verdeckkastens 13 übereinstimmt. Gleichzeit ist gewährleistet, dass das Windschott 2 in seiner Wirkstellung strömungstechnisch optimal, in Längsrichtung des Cabriolets betrachtet, nach vorne gerichtet ist. Dadurch ist ein besonders guter Windschutz der Passagiere gegeben. Ein solches Viergelenk, das eine Führung des oberen Querbügels 27 darstellt, ist durch zwei Lagerungspunkte 32 und 33 des äußeren Seitenbügels 28 bzw. des inneren Seitenbügels 29 in der Karosserie 8, durch einen Lagerungspunkt 34 des oberen Querbügels 27 in dem äußeren Seitenbügel 28 und durch einen Lagerungspunkt 35 des oberen Querbügels 27 in dem inneren Seitenbügel 29 gebildet. Das Windschott 2 nach dem zweiten Ausführungsbeispiel weist dementsprechend zwei solcher Viergelenke auf.

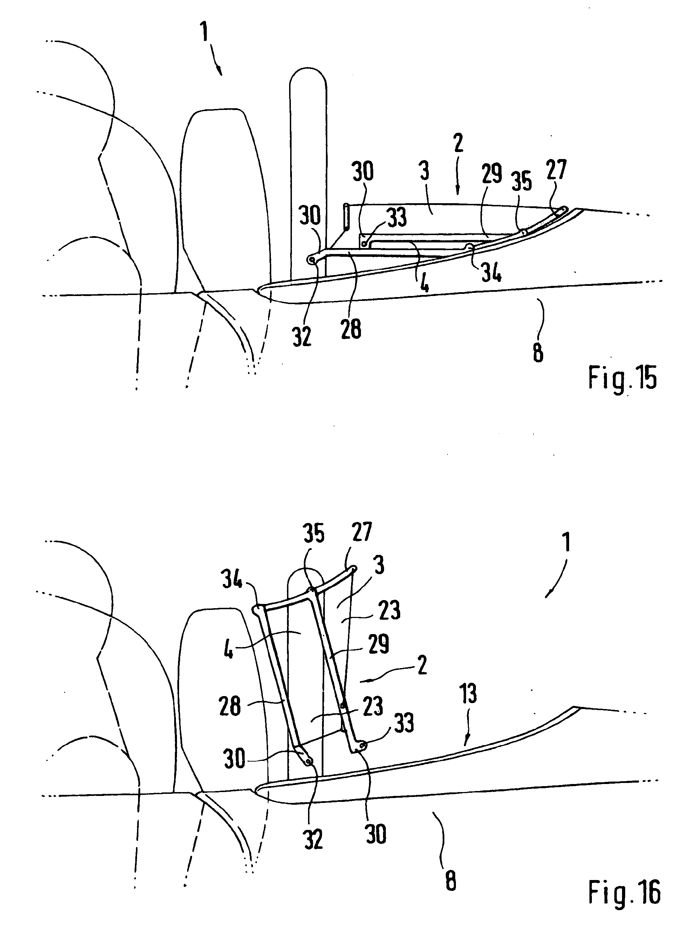

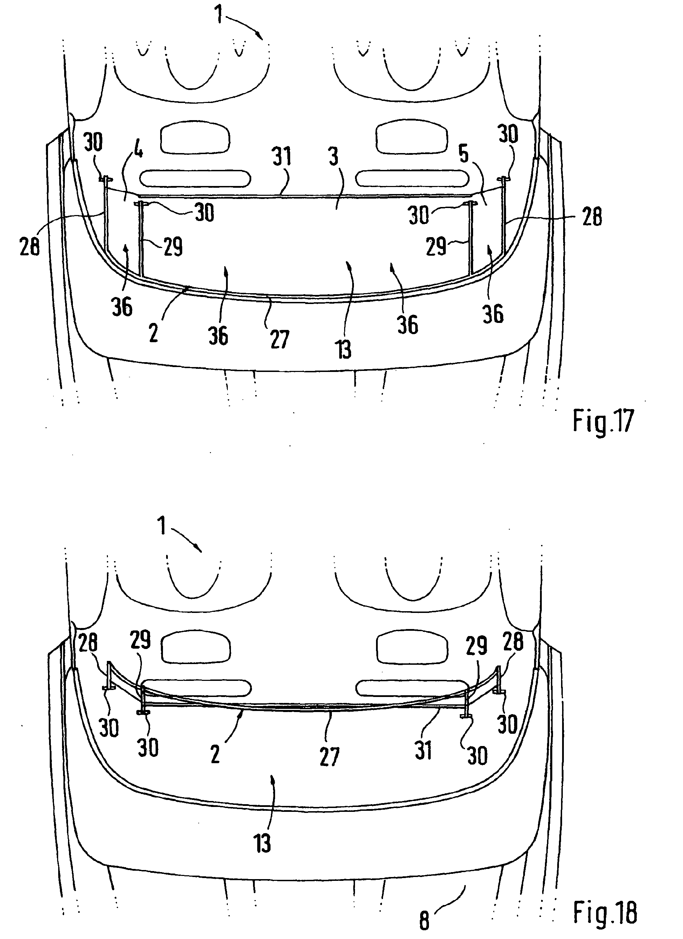

Fig. 15 zeigt eine Seitenansicht des Cabriolets nach Fig. 13 mit dem Windschott 2 in seiner Ruhestellung. Es ist deutlich die Bombierung des oberen Querbügels 27 nach unten zu sehen. Fig. 16 zeigt eine Seitenansicht des Cabriolets 1 nach Fig. 14 mit dem Windschott 2 in seiner Wirkstellung. Es ist deutlich die Bombierung des oberen Querbügels 27 nach vorne zu sehen. Fig. 17 zeigt eine Draufsicht auf das Cabriolet 1 nach Fig. 13 und Fig. 18 eine Draufsicht auf das Cabriolet 1 nach Fig. 14.

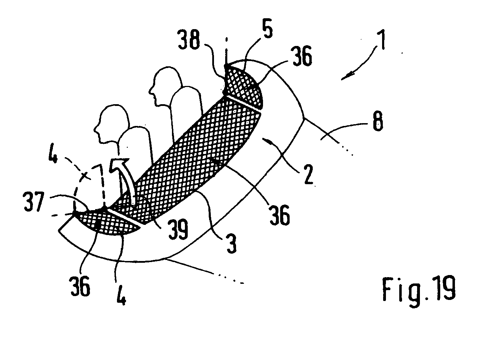

Fig. 19 zeigt eine schematische Ansicht des Cabriolets 1 mit schwenkbar an der Karosserie 8 befestigten Seitenteilen 4, 5. Die Fig. 19 zeigt das Windschott 2 in seiner Ruhestellung. Die Seitenteile 4, 5 sind z. B. mittels Scharnieren schwenkbar an der Karosserie 8 befestigt. Fig. 19 zeigt durch die Scharniere und die Befestigung der Seitenteile 4, 5 gebildete Schwenkachsen 37 und 38. Durch ein Verschwenken der Seitenteile 4, 5 nach oben können diese in ihre Wirkstellung gebracht werden, in der sie als Windschutz dienen. Dieses Verschwenken ist hier unabhängig von dem Mittelteil 3 möglich. Insofern besteht zwischen den Seitenteilen 4, 5 und dem Mittelteil 3 hier keine Kopplung. In der Fig. 19 ist gestrichelt das nach oben, in Richtung eines Pfeils 39 geschwenkte Seitenteil 4 angedeutet. Durch diese Ausführung ist vorteilhafterweise, je nach Wunsch des Passagiers, ein abgestuftes, zugfreies Fahren mit dem Cabriolet 1 möglich. Dieses Abstufen wird durch die Möglichkeit geschaffen, das Mittelteil 3 und die beiden Seitenteile 4, 5 unabhängig voneinander in ihre jeweiligen Ruhe- oder Wirkstellungen zu bringen.

In einer besonders vorteilhaften Ausgestaltung des Cabriolets 1 kann sein Verdeck, beispielsweise nach Betätigen eines Schalters durch einen Passagier, automatisch geöffnet oder geschlossen werden. Ebenso kann das Windschott 2, beispielsweise nach Betätigen eines Schalters durch einen Passagier, automatisch von seiner Wirk- in seine Abdeckstellung, oder umgekehrt, gefahren werden. Eine Kopplung zwischen Verdeck und Windschott kann vorteilhafterweise so ausgestaltet sein, dass die in ihrer Wirkstellung befindlichen Seitenteile 4, 5 des Windschotts 2 beim Schließen des Verdecks automatisch, wie in Fig. 7 dargestellt, vor oder hinter das Mittelteil 3 eingeklappt werden, um Platz zu schaffen für Verdecklenker des Verdecks. Nach vollständig abgeschlossenem Schließvorgang des Verdecks kann das komplette Windschott 2 dann automatisch in seine Ruhestellung gebracht werden. Es ist auch möglich, das Cabriolet 1 so auszugestalten, dass das Verdeck die in ihrer Ruhestellung befindlichen Seitenteile 4, 5 beim Verschließen des Verdecks automatisch nach oben, in ihre Wirkstellung fährt, wodurch die Verdecklenker das Verdeck problemlos in die Schließposition verfahren können. Ferner ist es vorteilhafterweise möglich, das Cabriolet 1 so auszugestalten, dass das Windschott 2 automatisch in seine Ruhestellung fährt, wenn das Cabriolet 1 mit offenem Verdeck geparkt wird. Das Parken kann beispielsweise über ein Abstellen eines Antriebmotors des Cabriolets 1 festgestellt werden. Eine Steuereinrichtung des Cabriolets 1 ist entsprechend ausgestaltet, um diese automatischen Vorgänge zu steuern.

## Patentansprüche

1. Cabriolet (1) mit einem Verdeckaufnahmeraum (13) zum Aufnehmen eines Verdecks und einem Windschott (2), das in eine Ruhestellung und in eine Wirkstellung bringbar ist, wobei es in seiner Wirkstellung als Windschutz dient, wobei der Verdeckaufnahmeraum (13) und das Windschott (2) so angeordnet und ausgebildet sind, dass das Windschott (2) in seiner Ruhestellung eine Abdeckung zum zumindest teilweisen Abdecken des Verdeckaufnahmeraums (13) darstellt, **dadurch gekennzeichnet, dass** das Windschott (2) einen sich in Cabrioletquerrichtung erstreckenden Mittelteil (3) und zwei Seitenteile (4, 5) aufweist, die benachbart zu zwei, in Cabrioletquerrichtung betrachtet, seitlichen Endbereichen des Mittelteils (3) angeordnet sind.

2. Cabriolet nach Anspruch 1, **dadurch gekennzeichnet, dass** die zwei Seitenteile (4, 5) an den zwei, in Cabrioletquerrichtung betrachtet, seitlichen Endbereichen des Mittelteils (3) angeordnet sind.

3. Cabriolet nach Anspruch 2, **dadurch gekennzeichnet, dass** die zwei Seitenteile (4, 5) an den zwei seitlichen Endbereichen des Mittelteils (3) beweglich gelagert sind.

4. Cabriolet nach Anspruch 3, **dadurch gekennzeichnet, dass** die zwei Seitenteile (4, 5) um in den zwei seitlichen Endbereichen des Mittelteils (3) vorhandene, insbesondere senkrecht zu einer Längserstreckung des Mittelteils (3) verlaufende Schwenkachsen (11, 12) schwenkbar gelagert sind.

5. Cabriolet nach Anspruch 3, **dadurch gekennzeichnet, dass** in den zwei seitlichen Endbereichen des Mittelteils (3) in Richtung der Längserstreckung des Mittelteils (3) verlaufende Schienen vorhanden sind, in denen die zwei Seitenteile (4, 5) verschiebbar gelagert sind.

6. Cabriolet nach Anspruch 1, **dadurch gekennzeichnet, dass** die zwei Seitenteile (4, 5) an einer Karosserie (8) des Cabriolets (1) angeordnet sind.

7. Cabriolet nach Anspruch 6, **dadurch gekennzeichnet, dass** die zwei Seitenteile (4, 5) unabhängig voneinander an der Karosserie (8) des Cabriolets (1) schwenkbar befestigt sind.

8. Cabriolet nach einem der Ansprüche 1-7, **dadurch gekennzeichnet, dass** der Mittelteil (3) des Windschotts (2) um eine sich in Cabrioletquerrichtung erstreckende Schwenkachse (10) schwenkbar gelagert ist.

9. Cabriolet nach einem der Ansprüche 1-8, **dadurch gekennzeichnet, dass** der Mittelteil (3) des Windschotts (2) zum Öffnen und/oder Schließen eines Verdecks des Cabriolets (1) in seine Wirkstellung bringbar ist, in der es als Windschutz dient.

10. Cabriolet nach einem der vorhergehenden Ansprüche, **dadurch gekennzeichnet, dass** das Windschott (2) zum Gewährleisten der Windschutz- und der Abdeckwirkung eine Wirkfläche (36) aufweist, die so ausgestaltet ist, dass eine senkrecht zu einer Längserstreckung des Windschotts (2) verlaufende Höhe der Wirkfläche (36) veränderbar ist.

11. Cabriolet nach Anspruch 10, **dadurch gekennzeichnet, dass** das Windschott (2) so ausgestaltet ist, dass eine senkrecht zu seiner Längserstreckung verlaufende Höhe des Windschotts (2) veränderbar ist.

12. Cabriolet nach einem der vorhergehenden Ansprüche, **dadurch gekennzeichnet, dass** das Windschott (2) einen mit einem Stoff (23), insbesondere einem Netzstoff, bespannten Rahmen aufweist.

13. Cabriolet nach Anspruch 10 oder 11 und Anspruch 12, **dadurch gekennzeichnet, dass** der Stoff (23) ausschließlich an einem in Längserstreckung verlaufenden oberen Querteil (14) und an einem in Längserstreckung verlaufenden unteren Querteil (9) des Windschotts (2) befestigt ist.

14. Cabriolet nach Anspruch 12 oder 13, **dadurch gekennzeichnet, dass** der Stoff (23) ein dehnbarer Stoff ist.

15. Cabriolet nach einem der vorhergehenden Ansprüche, **dadurch gekennzeichnet, dass** das Windschott (2) so ausgestaltet ist, dass es in seiner Ruhestellung eine Bombierung aufweist, die an eine Bombierung eines an den Verdeckaufnahmeraum (13) angrenzenden Karosseriebereichs angepasst ist.

16. Cabriolet nach einem der vorhergehenden Ansprüche, **dadurch gekennzeichnet, dass** das Windschott (2) so ausgestaltet ist, dass es in seiner Wirkstellung eine in Cabrioletlängsrichtung nach vorne gerichtete Bombierung aufweist.

17. Cabriolet nach einem der vorhergehenden Ansprüche, **dadurch gekennzeichnet, dass** ein oberes Querteil (27) des Windschotts (2) eine Bombierung aufweist und drehbar gelagert ist.

18. Cabriolet nach Anspruch 17, **dadurch gekennzeichnet, dass** das obere Querteil (27) in einem seitlichen Endbereich des Windschotts (2) drehbar gelagert ist.

19. Cabriolet nach Anspruch 17 oder 18, **dadurch gekennzeichnet, dass** das obere Querteil (27) mittels einer Führung nach Art eines Viergelenks geführt ist.

20. Cabriolet nach einem der vorhergehenden Ansprüche, **dadurch gekennzeichnet, dass** eine Betätigung eines Verdecks des Cabriolets (1) mit einer Betätigung des Windschotts (2) gekoppelt ist.

## Claims

1. Convertible (1) with a roof storage compartment (13) for receiving a roof and a wind stop (2) which can be brought into an inoperative position and into an operative position, wherein the wind stop serves in the operative position thereof as a wind break, and wherein the roof storage compartment (13) and the wind stop (2) are arranged and designed in such a manner that the wind stop (2), in the inoperative position thereof, constitutes a cover for at least partially covering the roof storage compartment (13), **characterized in that** the wind stop (2) has a central part (3) extending in the transverse direction of the convertible and two side parts (4, 5) which are arranged adjacent to two, as viewed in the transverse direction of the convertible, lateral end regions of the central part (3).

2. Convertible according to Claim 1, **characterized in that** the two side parts (4, 5) are arranged on the two, as viewed in the transverse direction of the convertible, lateral end regions of the central part (3).

3. Convertible according to Claim 2, **characterized in that** the two side parts (4, 5) are mounted movably on the two lateral end regions of the central part (3).

4. Convertible according to Claim 3, **characterized in that** the two side parts (4, 5) are mounted pivotably about pivot axes (11, 12) which are present in the two lateral end regions of the central part (3) and in particular run perpendicularly to a longitudinal extent of the central part (3).

5. Convertible according to Claim 3, **characterized in that** in the two lateral end regions of the central part (3) there are rails which run in the direction of the longitudinal extent of the central part (3) and in which the two side parts (4, 5) are displaceably mounted.

6. Convertible according to Claim 1, **characterized in that** the two side parts (4, 5) are arranged on a body (8) of the convertible (1).

7. Convertible according to Claim 6, **characterized in that** the two side parts (4, 5) are fastened pivotably to the body (8) of the convertible (1) independently of each other.

8. Convertible according to one of Claims 1 - 7, **characterized in that** the central part (3) of the wind stop (2) is mounted pivotably about a pivot axis (10) extending in the transverse direction of the convertible.

9. Convertible according to one of Claims 1 - 8, **characterized in that** the central part (3) of the wind break (2) for opening and/or closing a roof of the convertible (1) can be brought into the operative position thereof, in which it serves as a wind break.

10. Convertible according to one of the preceding claims, **characterized in that**, in order to ensure the wind break effect and the covering effect, the wind stop (2) has an operative surface (36) which is configured in such a manner that a height of the operative surface (36) running perpendicularly to a longitudinal extent of the wind stop (2) can be changed.

11. Convertible according to Claim 10, **characterized in that** the wind stop (2) is configured in such a manner that a height of the wind stop (2) running perpendicularly to the longitudinal extent thereof can be changed.

12. Convertible according to one of the preceding claims, **characterized in that** the wind stop (2) has a frame covered with a fabric (23), in particular netting.

13. Convertible according to Claim 10 or 11 and Claim 12, **characterized in that** the fabric (23) is fastened exclusively to an upper transverse part (14) running in the longitudinal extent and to a lower transverse part (9) running in the longitudinal extent of the wind stop (2).

14. Convertible according to Claim 12 or 13, **characterized in that** the fabric (23) is an expandable fabric.

15. Convertible according to one of the preceding claims, **characterized in that** the wind stop (2) is configured in such a manner that, in the inoperative position thereof, it has a convexity which is matched to a convexity of a body region adjacent to the roof storage compartment (13).

16. Convertible according to one of the preceding claims, **characterized in that** the wind stop (2) is configured in such a manner that, in the operative position thereof, it has a convexity directed forwards in the longitudinal direction of the convertible.

17. Convertible according to one of the preceding claims, **characterized in that** an upper transverse part (27) of the wind stop (2) has a convexity and is mounted rotatably.

18. Convertible according to Claim 17, **characterized in that** the upper transverse part (27) is mounted rotatably in a lateral end region of the wind stop (2).

19. Convertible according to Claim 17 or 18, **characterized in that** the upper transverse part (27) is guided by means of a guide in the manner of a four-bar linkage.

20. Convertible according to one of the preceding claims, **characterized in that** an actuation of a roof of the convertible (1) is coupled to an actuation of the wind stop (2).

## Revendications

1. Cabriolet (1) muni d'un compartiment de capote (13) pour recevoir une capote et d'un déflecteur de vent (2) qui peut être amené dans un position de repos et une position fonctionnelle, le déflecteur de vent servant de pare-vent dans sa position fonctionnelle, le compartiment de capote (13) et le déflecteur de vent (2) étant disposés et réalisés de telle sorte que le déflecteur de vent (2), dans sa position de repos, constitue un recouvrement pour recouvrir au moins en partie le compartiment de capote (13), **caractérisé en ce que** le déflecteur de vent (2) présente une partie centrale (3) s'étendant dans la direction transversale du cabriolet et deux parties latérales (4, 5), qui sont disposées à côté de deux régions d'extrémité latérales de la partie centrale (3), considérées dans la direction transversale du cabriolet.

2. Cabriolet selon la revendication 1, **caractérisé en ce que** les deux parties latérales (4, 5) sont disposées sur les deux régions d'extrémité latérales de la partie centrale (3), considérées dans la direction transversale du cabriolet.

3. Cabriolet selon la revendication 2, **caractérisé en ce que** les deux parties latérales (4, 5) sont montées de manière déplaçable sur les deux régions d'extrémité latérales de la partie centrale (3).

4. Cabriolet selon la revendication 3, **caractérisé en ce que** les deux parties latérales (4, 5) sont montées de manière à pouvoir pivoter autour d'axes de pivotement (11, 12) prévus dans les deux régions d'extrémité latérales de la partie centrale (3), notamment s'étendant perpendiculairement à une étendue longitudinale de la partie centrale (3).

5. Cabriolet selon la revendication 3, **caractérisé en ce que** des rails s'étendant dans la direction de l'étendue longitudinale de la partie centrale (3) sont prévus dans les deux régions d'extrémité latérales de la partie centrale (3), dans lesquels rails sont montées, de manière déplaçable, les deux parties latérales (4, 5).

6. Cabriolet selon la revendication 1, **caractérisé en ce que** les deux parties latérales (4, 5) sont disposées sur une carrosserie (8) du cabriolet (1).

7. Cabriolet selon la revendication 6, **caractérisé en ce que** les deux parties latérales (4, 5) sont fixées de manière pivotante indépendamment l'une de l'autre sur la carrosserie (8) du cabriolet (1).

8. Cabriolet selon l'une quelconque des revendications 1 à 7, **caractérisé en ce que** la partie centrale (3) du déflecteur de vent (2) est montée de manière à pouvoir pivoter autour d'un axe de pivotement (10) s'étendant dans la direction transversale du cabriolet.

9. Cabriolet selon l'une quelconque des revendications 1 à 8, **caractérisé en ce que** la partie centrale (3) du déflecteur de vent (2) peut être amenée, pour ouvrir et/ou fermer une capote du cabriolet (1), dans sa position fonctionnelle dans laquelle le déflecteur de vent sert de pare-vent.

10. Cabriolet selon l'une quelconque des revendications précédentes, **caractérisé en ce que** le déflecteur de vent (2), pour garantir l'effet de pare-vent et de recouvrement, présente une surface fonctionnelle (36), qui est configurée de telle sorte qu'une hauteur de la surface fonctionnelle (36) s'étendant perpendiculairement à une étendue longitudinale du déflecteur de vent (2) puisse être variée.

11. Cabriolet selon la revendication 10, **caractérisé en ce que** le déflecteur de vent (2) est configuré de telle sorte qu'une hauteur du déflecteur de vent (2) s'étendant perpendiculairement à son étendue longitudinale puisse être variée.

12. Cabriolet selon l'une quelconque des revendications précédentes, **caractérisé en ce que** le déflecteur de vent (2) présente un cadre tendu avec une matière (23), en particulier une matière réticulaire.

13. Cabriolet selon la revendication 10 ou 11 et la revendication 12, **caractérisé en ce que** la matière (23) est fixée exclusivement sur une partie transversale supérieure (14) s'étendant dans l'étendue longitudinale et sur une partie transversale inférieure (9) s'étendant dans l'étendue longitudinale, du déflecteur de vent (2).

14. Cabriolet selon la revendication 12 ou 13, **caractérisé en ce que** la matière (23) est une matière extensible.

15. Cabriolet selon l'une quelconque des revendications précédentes, **caractérisé en ce que** le déflecteur de vent (2) est configuré de telle sorte qu'il présente dans sa position de repos un bombement qui est adapté à un bombement d'une région de la carrosserie adjacente au compartiment de capote (13).

16. Cabriolet selon l'une quelconque des revendications précédentes, **caractérisé en ce que** le déflecteur de vent (2) est configuré de telle sorte que dans sa position fonctionnelle, il présente un bombement orienté vers l'avant dans la direction longitudinale du cabriolet.

17. Cabriolet selon l'une quelconque des revendications précédentes, **caractérisé en ce qu'**une partie transversale supérieure (27) du déflecteur de vent (2) présente un bombement et est montée à rotation.

18. Cabriolet selon la revendication 17, **caractérisé en ce que** la partie transversale supérieure (27) est montée à rotation dans une région d'extrémité latérale du déflecteur de vent (2).

19. Cabriolet selon la revendication 17 ou 18, **caractérisé en ce que** la partie transversale supérieure (27) est guidée au moyen d'un guide à la manière d'un quadrilatère articulé.

20. Cabriolet selon l'une quelconque des revendications précédentes, **caractérisé en ce qu'**un actionnement d'une capote du cabriolet (1) est accouplé à un actionnement du déflecteur de vent (2).
